# EUROPEAN PATENT SPECIFICATION

(11) **EP 3 027 679 B1**
(45) Date of publication and mention of the grant of the patent: **19.06.2024**
(21) Application number: 14833061.6
(22) Date of filing: 31.07.2014
(51) Int. Cl.: C08H 7/00, C08L 97/00, A24B 15/24

(54) **PROCESS FOR PRODUCING LIGNIN FROM TOBACCO**
VERFAHREN ZUR HERSTELLUNG VON LIGNIN AUS TABAK
PROCÉDÉ DE PRODUCTION DE LIGNINE À PARTIR DE TABAC

(30) Priority: 02.08.2013 US 201361861740 P; 23.07.2014 US 201414339094
(43) Date of publication of application: 08.06.2016
(73) Proprietor: R. J. Reynolds Tobacco Company, Winston-Salem, North Carolina 27101-3804 (US); American Science and Technology, Atlanta WI 54401 (US)
(72) Inventor: DUBE, Michael Francis, Winston-Salem, North Carolina 27104 (US); FAY III, James E., Boulder, Colorado 80302 (US); MANESH, Mohammad Ali, Miami Beach, FL 33139 (US); GUENTHER, John, Wausau, WI54401 (US); ZOBOROWSKI, Edwin, Wausau. WI 54401 (US)
(74) Representative: Dehns
(86) International application number: PCT/US2014/049039
(87) International publication number: WO 2015/017613

(56) References cited:
- WO-A1-2009/026691
- US-A- 2 190 909
- US-A- 2 380 448
- US-A- 2 766 148
- US-A- 2 766 148
- US-A1- 2002 197 688
- US-A1- 2012 211 016
- US-B2- 6 772 767
- US-B2- 8 360 072
- JOHN RALPH ET AL: "NMR characterization of altered lignins extracted from tobacco plants down-regulated for lignification enzymes cinnamyl- alcohol dehydrogenase and cinnamoyl-CoA reductase (monolignol͞genetic modification͞antisense RNA͞coniferyl alcohol͞feruloyl-CoA)", BIOCHEMISTRY JULY, vol. 95, no. 29, 1 October 1998 (1998-10-01), pages 12803-12808, XP055317724,
- RALPH, J. ET AL.: 'NMR characterization of altered lignins extracted from tobacco plants down-regulated for lignification enzymes cinnamyl-alcohol dehydrogenase and cinnamoyl-CoA reductase' PROCEEDINGS OF THE NATIONAL ACADEMY OF SCIENCES vol. 95, 1998, pages 12803 - 12808, XP055317724

## Description

### FIELD OF THE INVENTION

The present invention relates to the use of an isolated tobacco lignin as a colorant wherein the lignin is made or derived from tobacco.

### BACKGROUND OF THE INVENTION

Popular smoking articles, such as cigarettes, have a substantially cylindrical rod shaped structure and include a charge, roll or column of smokable material such as shredded tobacco (e.g., in cut filler form) surrounded by a paper wrapper thereby forming a so-called "tobacco rod." Normally, a cigarette has a cylindrical filter element aligned in an end-to-end relationship with the tobacco rod. Typically, a filter element comprises plasticized cellulose acetate tow circumscribed by a paper material known as "plug wrap." Certain cigarettes incorporate a filter element having multiple segments, and one of those segments can comprise activated charcoal particles. Typically, the filter element is attached to one end of the tobacco rod using a circumscribing wrapping material known as "tipping paper." It also has become desirable to perforate the tipping material and plug wrap, in order to provide dilution of drawn mainstream smoke with ambient air. A cigarette is employed by a smoker by lighting one end thereof and burning the tobacco rod. The smoker then receives mainstream smoke into his/her mouth by drawing on the opposite end (e.g., the filter end) of the cigarette.

The tobacco used for cigarette manufacture is typically used in blended form. For example, certain popular tobacco blends, commonly referred to as "American blends," comprise mixtures of flue-cured tobacco, burley tobacco, and Oriental tobacco, and in many cases, certain processed tobaccos, such as reconstituted tobacco and processed tobacco stems. The precise amount of each type of tobacco within a tobacco blend used for the manufacture of a particular cigarette brand varies from brand to brand. However, for many tobacco blends, flue-cured tobacco makes up a relatively large proportion of the blend, while Oriental tobacco makes up a relatively small proportion of the blend. See, for example, Tobacco Encyclopedia, Voges (Ed.) p. 44-45 (1984), Browne, The Design of Cigarettes, 3 Ed., p. 43 (1990) and Tobacco Production, Chemistry and Technology, Davis et al. (Eds.) p. 346 (1999).

Through the years, various treatment methods and additives have been proposed for altering the overall character or nature of tobacco materials utilized in tobacco products. For example, additives or treatment processes have been utilized in order to alter the chemistry or sensory properties of the tobacco material, or in the case of smokable tobacco materials, to alter the chemistry or sensory properties of mainstream smoke generated by smoking articles including the tobacco material. The sensory attributes of cigarette smoke can be enhanced by incorporating flavoring materials into various components of a cigarette. Exemplary flavoring additives include menthol and products of Maillard reactions, such as pyrazines, aminosugars, and Amadori compounds. See also, Leffingwell et al., Tobacco Flavoring for Smoking Products, R.J. Reynolds Tobacco Company (1972). In some cases, treatment processes involving the use of heat can impart to the processed tobacco a desired color or visual character, desired sensory properties, or a desired physical nature or texture. Various processes for preparing flavorful and aromatic compositions for use in tobacco compositions are set forth in US Pat. Nos. 3,424,171 to Rooker; 3,476,118 to Luttich; 4,150,677 to Osborne, Jr. et al.; 4,986,286 to Roberts et al.; 5,074,319 to White et al.; 5,099,862 to White et al.; 5,235,992 to Sensabaugh, Jr.; 5,301,694 to Raymond et al.; 6,298,858 to Coleman, III et al.; 6,325,860 to Coleman, III et al.; 6,428,624 to Coleman, III et al.; 6,440,223 to Dube et al.; 6,499,489 to Coleman, III; 6,591,841 to White et al.; and 6,695,924 to Dube et al.; and US Pat. Appl. Publication Nos. 2004/0173228 to Coleman, III and 2010/0037903 to Coleman, III et al.. Additionally, examples of representative components that can be employed as so-called natural tar diluents in tobacco products are set in PCT WO 07/012980 to Lipowicz.

Tobacco also may be enjoyed in a so-called "smokeless" form. Particularly popular smokeless tobacco products are employed by inserting some form of processed tobacco or tobacco-containing formulation into the mouth of the user. Various types of smokeless tobacco products are set forth in US Pat. Nos. 1,376,586 to Schwartz; 3,696,917 to Levi; 4,513,756 to Pittman et al.; 4,528,993 to Sensabaugh, Jr. et al.; 4,624,269 to Story et al.; 4,987,907 to Townsend; 5,092,352 to Sprinkle, III et al.; 5,387,416 to White et al.; and 8,336,557 to Kumar et al.; US Pat. Appl. Pub. Nos. 2005/0244521 to Strickland et al. and 2008/0196730 to Engstrom et al.; PCT WO 04/095959 to Amarp et al.; PCT WO 05/063060 to Atchley et al.; PCT WO 05/016036 to Bjorkholm; and PCT WO 05/041699 to Quinter et al.. See, for example, the types of smokeless tobacco formulations, ingredients, and processing methodologies set forth in US Pat. Nos. 6,953,040 to Atchley et al. and 7,032,601 to Atchley et al..

One type of smokeless tobacco product is referred to as "snuff." Representative types of moist snuff products, commonly referred to as "snus," have been manufactured in Europe, particularly in Sweden, by or through companies such as Swedish Match AB, Fiedler & Lundgren AB, Gustavus AB, Skandinavisk Tobakskompagni A/S, and Rocker Production AB. Snus products available in the U.S.A, have been marketed under the tradenames Camel Snus Frost, Camel Snus Original and Camel Snus Spice by R. J. Reynolds Tobacco Company. See also, for example, Bryzgalov et al., 1N1800 Life Cycle Assessment, Comparative Life Cycle Assessment of General Loose and Portion Snus (2005). In addition, certain quality standards associated with snus manufacture have been assembled as a so-called GothiaTek standard. Representative smokeless tobacco products also have been marketed under the tradenames Oliver Twist by House of Oliver Twist A/S; Copenhagen, Skoal, SkoalDry, Rooster, Red Seal, Husky, and Revel by U.S. Smokeless Tobacco Co.; "taboka" by Philip Morris USA; Levi Garrett, Peachy, Taylor's Pride, Kodiak, Hawken Wintergreen, Grizzly, Dental, Kentucky King, and Mammoth Cave by Conwood Company, LLC; and Camel Orbs, Camel Sticks, and Camel Strips by R. J. Reynolds Tobacco Company.

The sensory attributes of smokeless tobacco can also be enhanced by incorporation of certain flavoring materials. See, for example, US Pat. Nos. 6,668,839 to Williams; 6,834,654 to Williams; 7,032,601 to Atchley et al.; 7,694,686 to Atchley et al.; 7,861,728 to Holton, Jr. et al.; 7,819,124 to Strickland et al.; 7,810,507 to Dube et al.; and 8,168,855 to Nielsen et al; US Pat. Appl. Pub. Nos. 2004/0020503 to Williams, 2006/0191548 to Strickland et al.; 2007/0062549 to Holton, Jr. et al.; 2008/0029116 to Robinson et al.; 2008/0029117 to Mua et al.; and 2008/0173317 to Robinson et al..

Among the various constituents of tobacco is lignin (CAS 9005-53-2). See, for example, Tso, Physiology and Biochemistry of Tobacco Plants, pp. 173, 196, 198, 259, 267, 309 (1972). A polymer, lignin is found in a wide variety of molecular weights and may be composed of various proportions of coniferyl, p-coumaryl and sinapyl alcohols. While it may serve any of a number of functions in tobacco product formulations, lignin is known in the art to be useful in the preparation of vanillin.

Articles and methods pertaining to lignin from tobacco are known in the art. US Pat. No. 2,766,148 to Lawrence discloses an article of manufacture comprising tobacco and a derivative of a high molecular weight polyhydric compound selected from the group consisting of polysaccharides, conjugated saccharides and lignins. US Pat. Nos. 5,981,837, 6,489,538 and 6,610,908 to Chapple disclose methods of regulating tobacco lignin composition. US Pat. No. 6,772,767 to Mua et al. discloses a method of making a tobacco material with reduced levels of lignin.

While articles and methods pertaining to lignin from tobacco are known in the art, no process has hitherto been disclosed whereby a composition comprising lignin is prepared from tobacco that is suitable for use as a dye or as a plasticizer or a filler compatible with any of various polymers used to make plastic articles. Because tobacco has long been cultivated throughout the world, though full utilization of tobacco biomass has yet to be attained, there is a long-felt need for a process for preparing from tobacco a composition useful as a dye or a pigment or a plasticizer or a filler or a coating compatible with any of various polymers used to make plastic articles. More generally, there is a long-felt need for a facile process for the preparation of a composition comprising lignin and suitable for use as a dye or a pigment or a plasticizer or a filler or a coating compatible with any of various polymers used to make plastic articles.

As it should be clear from the foregoing that lignin is useful not only as a constituent of various tobacco products but also a dye or a pigment or a plasticizer or a filler or a coating compatible with any of various polymers used to make plastic articles, it can also be seen that it would accordingly be desirable to provide a process for producing lignin from tobacco, that is, in particular, from *Nicotiana* species, for use, *inter alia,* in tobacco compositions utilized in a variety of tobacco products or in the processing of tobacco, or more generally in compositions that may comprise a dye or a pigment or a plasticizer or a filler or a coating compatible with any of various polymers used to make plastic articles.

J. Ralph et al (Proc. Natl. Acad. Sci. USA, vol. 95, pp. 12803-12808, Oct 1998) discloses lignins extracted from tobacco plants down-regulated for lignification enzymes cinnamyl-alcohol dehydrogenase and cinnamoyl-CoA reductase. US 2380448 discloses the recovery of lignins by means of dilute acid pressure hydrolysis of wood and extraction with oxygenated organic solvents. US 2190909 discloses a process for manufacturing a fibrous molded product comprising activating the lignin of a lignin-containing material by heating the material with alcohol in the presence of an acid catalyst. WO 2009/026691 discloses a degradable plastic film for use as an agricultural mulch film. US 2766148 discloses a smoking tobacco product having improved aroma and flavour characteristics.

### SUMMARY OF THE EMBODIMENTS

A process such as is described herein provides materials from *Nicotiana* species (e.g., tobacco-derived materials) comprising isolated components from plants of the *Nicotiana* species useful for incorporation into tobacco compositions that comprise a dye or a pigment or a plasticizer or a filler or a coating compatible with any of various polymers used to make a plastic articles. A process such as is described in various embodiments herein also provides processes for isolating components from *Nicotiana* species (e.g., tobacco materials), and processes for processing those components and tobacco materials incorporating those components. For example, tobacco-derived materials can be prepared by subjecting at least a portion of a tobacco plant (e.g., leaves, stalks, roots, or stems) to a separation process, which typically can include multiple sequential extraction steps, in order to isolate desired components of the tobacco material. For example, tobacco-derived materials can be prepared by subjecting at least a portion of a tobacco plant (e.g., leaves, stalks, roots, or stems) to a separation process, which typically can include multiple sequential extraction steps, in order to isolate desired components of the tobacco material.

When used in connection with a process such as is described in various embodiments herein, the term "biomass" denotes one or more portions of a plant, and in particular denotes substantially the entirety of the superterranean portion of a plant, optionally including some or all of the subterranean portion of a plant. Accordingly, the term "biomass" may refer to leaf or to seed or to any other superterranean portion of a plant, or to any combination thereof, optionally including some or all of the subterranean portion of a plant. Accordingly, the term "biomass" and related terms such as "biomatter" and "plant source" may be properly understood to refer to any one or more portions of a harvested plant that may be processed to extract, separate, or isolate components of interest therefrom.

When used in connection with a process such as is described in various embodiments herein, the term "one or more plants of genus *Nicotiana"* denotes any one or more plants of the genus *Nicotiana* of family *Solanaceae,* including, for example, any one or more of the following: N. alata, N. arentsii, N. excelsior, N. forgetiana, N. glauca, N. glutinosa, N. gossei, N. kawakamii, N. knightiana, N. langsdorffi, N. otophora, N. setchelli, N. sylvestris, N. tomentosa, N. tomentosiformis, N. undulata, and N. x sanderae, N. africana, N. amplexicaulis, N. benavidesii, N. bonariensis, N. debneyi, N. longiflora, N. maritina, N. megalosiphon, N. occidentalis, N. paniculata, N. plumbaginifolia, N. raimondii, N. rosulata, N. rustica, N. simulans, N. stocktonii, N. suaveolens, N. tabacum, N. umbratica, N. velutina, and N. wigandioides, N. acaulis, N. acuminata, N. attenuata, N. benthamiana, N. cavicola, N. clevelandii, N. cordifolia, N. corymbosa, N. fragrans, N. goodspeedii, N. linearis, N. miersii, N. nudicaulis, N. obtusifolia, N. occidentalis subsp. Hersperis, N. pauciflora, N. petunioides, N. quadrivalvis, N. repanda, N. rotundifolia, N. Solanifolia, N. spegazzinii.

When used in connection with a process such as is described in various embodiments herein, "alkali metal hydroxide" denotes any one or more of the compounds having formula MOH where M is Li, Na, K, Rb, Cs, or Fr.

When used in connection with a process such as is described in various embodiments herein, "mineral acid" denotes an inorganic acid and accordingly can refer, for example, to any one or more of the following: sulfuric acid; phosphoric acid; nitric acid; chloric acid; hydrofluoric acid; hydrochloric acid; hydrobromic acid; hydroiodic acid; chromic acid; sulfurous acid; phosphorous acid; nitrous acid; a halogensulfonic acid HSO₃X wherein X is halogen; perchloric acid; perbromic acid; periodic acid; hydrogen sulfide; hypophosphorous acid; tetrafluoroboric acid; hexafluorophosphoric acid.

The use of *Nicotiana-derived* (e.g., tobacco-derived) materials produced by a process such as is described in various embodiments herein enables the preparation of tobacco compositions for smoking articles or smokeless tobacco compositions that are derived substantially or even entirely from *Nicotiana* materials. For example, a tobacco composition can incorporate tobacco or tobacco-derived material of some form, including isolated components from *Nicotiana* species, such that at least about 80 weight percent, more typically at least about 90 weight percent, or even at least about 95 weight percent (on a dry weight basis), of that tobacco composition consists of tobacco-derived material.

It has long been recognized that there is a need to make fuller use of material or substance from tobacco, and in particular from plants or portions of plants from the *Nicotiana* species. Readily available starting materials or inputs from plants or portions of plants from the *Nicotiana* species, such starting materials or inputs being useful in particular for inclusion as starting materials or inputs in a process whereby material or substance from tobacco can be more fully utilized, include inter alia tobacco biomass. Tobacco biomass can include for example the entirety of the substance of a tobacco plant that has been harvested whole. Tobacco biomass can include for example essentially all of the superterranean parts of a tobacco plant and optionally can include some or all of the subterranean parts of a tobacco plant. Tobacco biomass can include for example the solid portion of a tobacco plant that has been harvested whole, or the solid portion of essentially all of superterranean parts of a tobacco plant, and from which so-called "green juice" has been expelled for example through the action of a screw press. Tobacco biomass can include for example such a solid portion from which at least a portion of the water has been removed by drying.

Among ways in which fuller use can be made of material or substance from tobacco, and in particular from plants or portions of plants from the *Nicotiana* species, are various physical and/or chemical transformations to which plants or portions of plants from the *Nicotiana* species can be subjected. Such physical and/or chemical transformations may result in outputs or products having one or more desired or favorable properties. Such outputs or products may themselves be useful as starting material or inputs for further useful processes. Among physical transformations to which plants or portions of plants from the *Nicotiana* species can be subjected are disruptions of the physical integrity of tobacco biomass, such as a disruption resulting from the action of a screw press against a quantity of tobacco biomass. Among physical transformations to which plants or portions of plants from the Nicotiana species can be subjected are fractionations according to, for example, particle size, relative density, sedimentation velocity, or affinity for a fixed matrix.

The present invention provides the use of an isolated tobacco lignin as a colorant, wherein the isolated tobacco lignin is produced by a process as defined in claim 1.

According to a process such as is described in various embodiments herein, a quantity of tobacco biomass, and for example a quantity of tobacco biomass that has been subjected to a physical transformation whereby the physical integrity of the biomass is disrupted, such as by maceration and/or one or more other applications of force whereby a plurality of particles of tobacco biomass is formed, is contacted with a quantity of acid to form an acidified digest mixture. A quantity of the resultant acidified digest mixture may be contacted with butanol to form a butanol-containing mixture. The resultant butanol-containing mixture may be separated into a butanol-soluble phase and a butanol-insoluble phase. Butanol may be removed from the butanol-soluble phase to yield an isolated lignin. Such a lignin is useful as a dye or a pigment or a plasticizer or a filler or a coating compatible with any of various polymers used to make plastic articles. For example, such a lignin is useful in making a plastic comprising poly-L-lactic acid (PLA) which may optionally comprise other constituents. Such a lignin is used to form a colorant which may optionally comprise other constituents.

Accordingly, the present invention provides the use of an isolated tobacco lignin as a colorant wherein the isolated tobacco lignin is produced by a process as defined in claim 1. Such lignin is used to form a colorant which may be incorporated into a polymer composition to form a plastic article.

### DETAILED DESCRIPTION

The process for forming the isolated tobacco lignin such as is described herein now will be described more fully hereinafter. The process such as is described herein may, however, be embodied in many different forms and should not be construed as limited to the embodiments set forth herein; rather, these embodiments are provided so that this disclosure will be thorough and complete, and will fully convey the scope of a process such as is described in various embodiments herein to those skilled in the art. As used in this specification and the claims, the singular forms "a," "an," and "the" include plural referents unless the context clearly dictates otherwise. Reference to "dry weight percent" or "dry weight basis" refers to weight on the basis of dry ingredients (i.e., all ingredients except water).

The selection of the plant from the *Nicotiana* species can vary; and in particular, the types of tobacco or tobaccos may vary. Tobaccos that can be employed include flue-cured or Virginia (e.g., K326), burley, sun-cured (e.g., Indian Kurnool and Oriental tobaccos, including Katerini, Prelip, Komotini, Xanthi and Yambol tobaccos), Maryland, dark, dark-fired, dark air cured (e.g., Passanda, Cubano, Jatin and Bezuki tobaccos), light air cured (e.g., North Wisconsin and Galpao tobaccos), Indian air cured, Red Russian and *Rustica* tobaccos, as well as various other rare or specialty tobaccos. Descriptions of various types of tobaccos, growing practices and harvesting practices are set forth in Tobacco Production, Chemistry and Technology, Davis et al. (Eds.) (1999). Various representative types of plants from the *Nicotiana* species are set forth in Goodspeed, The Genus Nicotiana (Chronica Botanica, 1954); US Pat. Nos. 4,660,577 to Sensabaugh, Jr. et al.; 5,387,416 to White et al.; 7,025,066 to Lawson et al.; 7,798,153 to Lawrence, Jr.; and 8,186,360 to Marshall et al.. Of particular interest are N. alata, N. arentsii, N. excelsior, N. forgetiana, N. glauca, N. glutinosa, N. gossei, N. kawakamii, N. knightiana, N. langsdorffi, N. otophora, N. setchelli, N. sylvestris, N. tomentosa, N. tomentosiformis, N. undulata, and N. x sanderae. Also of interest are N. africana, N. amplexicaulis, N. benavidesii, N. bonariensis, N. debneyi, N. longiflora, N. maritina, N. megalosiphon, N. occidentalis, N. paniculata, N. plumbaginifolia, N. raimondii, N. rosulata, N. rustica, N. simulans, N. stocktonii, N. suaveolens, N. tabacum, N. umbratica, N. velutina, and N. wigandioides. Other plants from the *Nicotiana* species include N. acaulis, N. acuminata, N. attenuata, N. benthamiana, N. cavicola, N. clevelandii, N. cordifolia, N. corymbosa, N. fragrans, N. goodspeedii, N. linearis, N. miersii, N. nudicaulis, N. obtusifolia, N. occidentalis subsp. Hersperis, N. pauciflora, N. petunioides, N. quadrivalvis, N. repanda, N. rotundifolia, N. solanifolia and N. spegazzinii.

*Nicotiana* species can be derived using genetic-modification or crossbreeding techniques (e.g., tobacco plants can be genetically engineered or crossbred to increase or decrease production of certain components or to otherwise change certain characteristics or attributes). See, for example, the types of genetic modifications of plants set forth in US Pat. Nos. 5,539,093 to Litzmaurice et al.; 5,668,295 to Wahab et al.; 5,705,624 to Litzmaurice et al.; 5,844,119 to Weigl; 6,730,832 to Dominguez et al.; 7,173,170 to Liu et al.; 7,208,659 to Colliver et al.; and 7,230,160 to Benning et al.; US Patent Appl. Pub. No. 2006/0236434 to Conkling et al.; and PCT WO 08/103935 to Nielsen et al.

For the preparation of smokeless and smokable tobacco products, it is typical for harvested plants of the *Nicotiana* species to be subjected to a curing process. Descriptions of various types of curing processes for various types of tobaccos are set forth in Tobacco Production, Chemistry and Technology, Davis et al. (Eds.) (1999). Exemplary techniques and conditions for curing flue-cured tobacco are set forth in Nestor et al., Beitrage Tabakforsch. Int., 20, 467-475 (2003) and U.S. Pat. No. 6,895,974 to Peele. See, also, for example, US Pat. No. 7,650,892 to Groves et al.. Representative techniques and conditions for air curing tobacco are set forth in Roton et al., Beitrage Tabakforsch. Int., 21, 305-320 (2005) and Staaf et al., Beitrage Tabakforsch. Int., 21, 321-330 (2005). Certain types of tobaccos can be subjected to alternative types of curing processes, such as fire curing or sun curing. Preferably, harvested tobaccos that are cured are then aged.

At least a portion of the plant of the *Nicotiana* species (e.g., at least a portion of the tobacco portion) can be employed in an immature form. That is, the plant, or at least one portion of that plant, can be harvested before reaching a stage normally regarded as ripe or mature. As such, for example, tobacco can be harvested when the tobacco plant is at the point of a sprout, is commencing leaf formation, is commencing seeding, is commencing flowering, or the like.

At least a portion of the plant of the *Nicotiana* species (e.g., at least a portion of the tobacco portion) can be employed in a mature form. That is, the plant, or at least one portion of that plant, can be harvested when that plant (or plant portion) reaches a point that is traditionally viewed as being ripe, over-ripe or mature. As such, for example, through the use of tobacco harvesting techniques conventionally employed by farmers, Oriental tobacco plants can be harvested, burley tobacco plants can be harvested, or Virginia tobacco leaves can be harvested or primed by stalk position. After harvest, the plant of the *Nicotiana* species, or portion thereof, can be used in a green form (e.g., tobacco can be used without being subjected to any curing process). For example, tobacco in green form can be frozen, freeze-dried, subjected to irradiation, yellowed, dried, cooked (e.g., roasted, fried or boiled), or otherwise subjected to storage or treatment for later use. Such tobacco also can be subjected to aging conditions.

A tobacco product may incorporate tobacco that is combined with some form of biomass or one or more anatomical parts obtained from, or derived from, a plant of at least one *Nicotiana* species. That is, a portion of a tobacco product according to a process such as is described in various embodiments herein can be composed of some form of biomass or one or more anatomical parts of a *Nicotiana* species, such as parts or pieces of biomass or one or more anatomical parts, or processed materials incorporating processed biomass or one or more anatomical parts or components thereof. At least a portion of the tobacco product can be composed of components of biomass or one or more anatomical parts, such as ingredients removed from biomass or one or more anatomical parts (e.g., by extraction, distillation, or other types of processing techniques). At least a portion of the tobacco product can be composed of components derived from biomass or one or more anatomical parts, such as components collected after subjecting biomass or one or more anatomical parts to chemical reaction or after subjecting components collected from biomass or one or more anatomical parts to chemical reaction (e.g., acid/base reaction conditions or enzymatic treatment).

The *Nicotiana* species can be selected for the type of biomass or anatomical part that it produces. For example, plants can be selected on the basis that those plants produce relatively abundant biomass or seed, produce biomass or seed that incorporate relatively high levels of specific desired components, and the like.

The *Nicotiana* species of plant can be grown under agronomic conditions so as to promote development of biomass or one or more anatomical parts. Tobacco plants can be grown in greenhouses, growth chambers, or outdoors in fields, or grown hydroponically.

According to a process such as is described in various embodiments herein, biomass or one or more anatomical parts are harvested from the *Nicotiana* species of plant. The manner by which biomass or one or more anatomical parts are harvested can vary. Typically, essentially all the biomass or anatomical parts can be harvested, and employed as such.

The time of harvest during the life cycle of the plant can vary. For example, biomass or one or more anatomical parts can be harvested when immature. Alternatively, biomass or one or more anatomical parts can be harvested after the point that the plant has reached maturity.

The post-harvest processing of biomass or one or more anatomical parts can vary. After harvest, the biomass or one or more anatomical parts, or portion thereof, can be used in the harvested form (e.g., the biomass can be used without being subjected to any curing and/or aging process steps). For example, biomass or one or more anatomical parts can be used without being subjected to significant storage, handling or processing conditions. In certain situations, it is preferable that the fresh biomass or one or more anatomical parts be used virtually immediately after harvest. Alternatively, for example, biomass or one or more anatomical parts can be refrigerated or frozen for later use, freeze dried, subjected to irradiation, yellowed, dried, cured, or otherwise subjected to storage or treatment for later use.

Harvested biomass can be physically processed. Biomass or one or more anatomical parts, or one or more parts thereof, can be further subdivided into parts or pieces (e.g., biomass can be comminuted, pulverized, milled or ground into pieces or parts that can be characterized as granules, particulates or fine powders). Biomass or one or more anatomical parts, or one or more parts thereof, can be subjected to external forces or pressure (e.g., by being pressed or subjected to roll treatment). When carrying out such processing conditions, biomass or one or more anatomical parts can have a moisture content that approximates its natural moisture content (e.g., its moisture content immediately upon harvest), a moisture content achieved by adding moisture to the biomass or a moisture content that results from the drying of the biomass. For example, powdered, pulverized, ground or milled pieces of biomass or one or more anatomical parts can have moisture contents of less than about 25 weight percent, often less than about 20 weight percent, and frequently less than about 15 weight percent. Parts or pieces of biomass or one or more anatomical parts can be used as components of tobacco products without further processing, or alternatively the particulate biomass or anatomical part material can be processed further prior to incorporation into a tobacco product.

Harvested biomass or one or more anatomical parts, or components thereof, can be subjected to other types of processing conditions. For example, components of biomass or one or more anatomical parts can be separated from one another, or otherwise fractionated into chemical classes or mixtures of individual compounds. As used herein, an "isolated biomass component," "isolated component of one or more anatomical parts," "biomass isolate," or "isolate of one or more anatomical parts" is a compound or complex mixture of compounds separated from biomass or one or more anatomical parts of a plant of the *Nicotiana* species. The isolated biomass component or isolated component of one or more anatomical parts can be a single compound, a homologous mixture of similar compounds (e.g., isomers of a flavorful or aromatic compound), or a heterologous mixture of dissimilar compounds (e.g., a complex mixture of various compounds of different types, preferably having desirable sensory attributes).

Typical separation processes can include one or more process steps such as solvent extraction (e.g., using polar solvents, non-polar organic solvents, or supercritical fluids), chromatography, distillation, filtration, cold pressing or other pressure-based techniques, recrystallization, and/or solvent-solvent partitioning. Exemplary extraction and separation solvents or carriers include water, alcohols (e.g., methanol or ethanol), hydrocarbons (e.g., heptane and hexane), diethyl ether, methylene chloride and supercritical carbon dioxide. Exemplary techniques useful for extracting components from *Nicotiana* species are described in US Pat. Nos. 4,144,895 to Fiore; 4,150,677 to Osborne, Jr. et al.; 4,267,847 to Reid; 4,289,147 to Wildman et al.; 4,351,346 to Brummer et al.; 4,359,059 to Brummer et al.; 4,506,682 to Muller; 4,589,428 to Keritsis; 4,605,016 to Soga et al.; 4,716,911 to Poulose et al.; 4,727,889 to Niven, Jr. et al.; 4,887,618 to Bemasek et al.; 4,941,484 to Clapp et al.; 4,967,771 to Fagg et al.; 4,986,286 to Roberts et al.; 5,005,593 to Fagg et al.; 5,018,540 to Grubbs et al.; 5,060,669 to White et al.; 5,065,775 to Fagg; 5,074,319 to White et al.; 5,099,862 to White et al.; 5,121,757 to White et al.; 5,131,414 to Fagg; 5,131,415 to Munoz et al.; 5,148,819 to Fagg; 5,197,494 to Kramer; 5,230,354 to Smith et al.; 5,234,008 to Fagg; 5,243,999 to Smith; 5,301,694 to Raymond et al.; 5,318,050 to Gonzalez-Parra et al.; 5,343,879 to Teague; 5,360,022 to Newton; 5,435,325 to Clapp et al.; 5,445,169 to Brinkley et al.; 6,131,584 to Eauterbach; 6,298,859 to Kierulff et al.; 6,772,767 to Mua et al.; and 7,337,782 to Thompson. See also, the types of separation techniques set forth in Brandt et al., LC-GC Europe, p. 2-5 (March, 2002) and Wellings, A Practical Handbook of Preparative HPLC (2006). In addition, the biomass or components thereof can be subjected to the types of treatments set forth in Ishikawa et al., Chem. Pharm. Bull., 50, 501-507 (2002); Tienpont et al., Anal. Bioanal. Chem., 373, 46-55 (2002); Ochiai, Gerstel Solutions Worldwide, 6, 17-19 (2006); Coleman, III, et al., J. Sei. Food and Agric., 84, 1223-1228 (2004); Coleman, III et al., J. Sei. Food and Agric., 85, 2645-2654 (2005); Pawliszyn, ed., Applications of Solid Phase Microextraction, RSC Chromatography Monographs, (Royal Society of Chemistry, UK) (1999); Sahraoui et al., J. Chrom., 1210, 229-233 (2008); and US Pat. No. 5,301,694 to Raymond et al. See also, for example, the types of processing techniques set forth in Frega et al., JAOCS, 68, 29-33 (1991); Patel et al., Tob. Res., 24, 44-49 (1998); Giannelos et al., Ind. Crops Prod., 16, 1-9 (2002); Mukhtar et al., Chinese J. Chem., 25, 705-708 (2007); and Stanisavljevic et al., Eur. J. Lipid Sei. Technol., Ill, 513-518 (2009).

Components of biomass or of one or more anatomical parts can be subjected to conditions so as to cause those components (whether as part of the biomass or of the one or more anatomical parts or in the form of an isolated component) to undergo chemical transformation. For example, a biomass isolate or an isolate of one or more anatomical parts that has been separated from the biomass or one or more anatomical parts can be treated to cause chemical transformation or can be admixed with other ingredients. Such chemical transformation or modification can result in changes of certain chemical and physical properties of such biomass isolate or isolate of one or more anatomical parts (e.g., sensory attributes of such an isolate). Exemplary chemical modification processes can be carried out by acid/base reaction, hydrolysis, heating, and enzymatic treatments (e.g., using hydrolyase, glycosidase, or glucosidase); and as such, components of the isolate can undergo esterification, transesterification, isomeric conversion, acetal formation, acetal decomposition, and the like. Additionally, various isolated lipid components of the biomass or one or more anatomical parts can be subj ected to hydrogenation in order to alter the degree of saturation of those components, and hence alter the physical form or behavior of those components.

In an embodiment, biomass or one or more anatomical parts can be subjected to solvent extraction using a solvent (e.g., a polar solvent or a non-polar organic solvent), and the resulting extract is collected and the extracted components are isolated. Then, any of the various biomass components or components of one or more anatomical parts may be subjected to enzymatic treatment to form an enzymatically-treated material. The enzymatically-treated material then is subjected to solvent extraction to form a biomass isolate or an isolate of one or more anatomical parts.

In an embodiment, the separating or isolating process comprises freezing harvested biomass or one or more anatomical parts or a portion thereof to form a frozen biomass or anatomical part material, processing the frozen biomass or anatomical part material into a particulate form, subjecting the particulate biomass or anatomical part material to an enzymatic treatment to chemically alter the particulate biomass or anatomical part material, and extracting the particulate biomass or anatomical part material with a solvent to produce a biomass isolate or an isolate of one or more anatomical parts. Exemplary enzymatic treatments include treatment with a glycosidase or a glucosidase.

Biomass or one or more anatomical parts and components or isolates thereof are useful as components for tobacco compositions, particularly tobacco compositions incorporated into smoking articles or smokeless tobacco products. Addition of such components to a tobacco composition can enhance a tobacco composition in a variety of ways, depending on the nature of the biomass and the type of tobacco composition. Exemplary such components can serve to provide flavor and/or aroma to a tobacco product (e.g., composition that alters the sensory characteristics of tobacco compositions or smoke derived therefrom). Lignin derived from biomass is suitable for use more generally in compositions that may comprise a dye or a pigment or a plasticizer or a filler or a coating compatible with any of various polymers used to make plastic articles.

The form of biomass isolate or isolate of one or more anatomical parts can vary. Typically, such isolate is in a solid, liquid, or semi-solid or gel form. Biomass can be used in concrete, absolute, or neat form. Such isolate can have a dry particulate form, a waxy form, or a thick paste form. Liquid forms include isolates contained within aqueous or organic solvent carriers.

Biomass or one or more anatomical parts, processed biomass or one or more anatomical parts, and biomass isolates or isolates from one more anatomical parts can be employed in a variety of forms. Biomass or one or more anatomical parts, or an isolate of biomass or of one more anatomical parts, can be employed as a component of processed tobaccos. In one regard, the biomass or one or more anatomical parts, or components thereof, can be employed within a top dressing formulation, or within a casing formulation for application to tobacco strip (e.g., using the types of manners and methods set forth in US Pat. No. 4,819,668 to Shelar). Alternatively, the biomass or one or more anatomical parts, or components thereof, can be employed as an ingredient of a reconstituted tobacco material (e.g., using the types of tobacco reconstitution processes generally set forth in US Pat. Nos. 5,143,097 to Sohn; 5,159,942 to Brinkley et al.; 5,598,868 to Jakob; 5,715,844 to Young; 5,724,998 to Gellatly; and 6,216,706 to Kumar). The biomass or one or more anatomical parts, or components thereof, also can be incorporated into a cigarette filter (e.g., in the filter plug, plug wrap, or tipping paper) or incorporated into cigarette wrapping paper, preferably on the inside surface, during the cigarette manufacturing process. An isolate from biomass or from one or more anatomical parts which isolate has a waxy or smooth texture can be used as a coating for the surface of a formed smokeless tobacco product. An isolate having sticky properties can be used as an adhesive (or component of an adhesive) or binding agent within tobacco products. An isolate having a oily or liquid character can be used as a solvent (e.g., to be used to replace, or act comparable to, a triglyceride type of solvent; or to replace a glycol type of solvent as a humectant or as a carrier for casing components).

Biomass or one or more anatomical parts, processed biomass or one or more anatomical parts, and biomass isolates or isolates from one more anatomical parts can be incorporated into smoking articles. The biomass or one or more anatomical parts, processed biomass or one or more anatomical parts, and biomass isolates or isolates from one more anatomical parts can be admixed with other components that are employed in the manufacture of tobacco products. Exemplary types of further ingredients that can be admixed with the biomass or anatomical part material include flavorants, fillers, binders, pH adjusters, buffering agents, colorants, disintegration aids, antioxidants, humectants and preservatives. Representative tobacco blends, non-tobacco components, and representative cigarettes manufactured therefrom, are set forth in US Pat. Nos. 4,836,224 to Lawson et al.; 4,924,888 to Perfetti et al.; 5,056,537 to Brown et al.; 5,220,930 to Gentry; 5,360,023 to Blakley et al.; and 6,701,936 to Shafer et al.; and PCT WO 02/037990 to Bereman. Those tobacco materials also can be employed for the manufacture of those types of cigarettes that are described in US Pat. Nos. 4,793,365 to Sensabaugh; 4,917,128 to Clearman et al.; 4,947,974 to Brooks et al.; 4,961,438 to Korte; 4,920,990 to Lawrence et al.; 5,033,483 to Clearman et al.; 5,074,321 to Gentry et al.; 5,105,835 to Drewett et al.; 5,178,167 to Riggs et al.; 5,183,062 to Clearman et al.; 5,211,684 to Shannon et al.; 5,247,949 to Deevi et al.; 5,551,451 to Riggs et al.; 5,285,798 to Banerjee et al.; 5,593,792 to Farrier et al.; 5,595,577 to Bensalem et al.; 5,816,263 to Counts et al.; 5,819,751 to Barnes et al.; 6,095,153 to Beven et al.; 6,311,694 to Nichols et al.; 6,367,481 to Nichols et al.; and 7,726,320 to Robinson et al.; and PCT WO 97/048294 to Matsuura et al. and PCT WO 98/016125 to Snaider et al.. See, also, those types of commercially marketed cigarettes described Chemical and Biological Studies on New Cigarette Prototypes that Heat Instead of Bum Tobacco, R. J. Reynolds Tobacco Company Monograph (1988) and Inhalation Toxicology, 12:5, p. 1-58 (2000).

*Nicotiana* biomass or one or more anatomical parts, processed biomass or one or more anatomical parts, and biomass isolates or isolates from one more anatomical parts can be incorporated into smokeless tobacco products, such as loose moist snuff, loose dry snuff, chewing tobacco, pelletized tobacco pieces (e.g., having the shapes of pills, tablets, spheres, coins, beads, obloids or beans), extruded or formed tobacco strips, pieces, rods, cylinders or sticks, finely divided ground powders, finely divided or milled agglomerates of powdered pieces and components, flake-like pieces, molded processed tobacco pieces, pieces of tobacco-containing gum, rolls of tape-like films, readily water-dissolvable or water-dispersible films or strips (e.g., US Pat. App. Pub. No. 2006/0198873 to Chan et al.), or capsule-like materials possessing an outer shell (e.g., a pliable or hard outer shell that can be clear, colorless, translucent or highly colored in nature) and an inner region possessing tobacco or tobacco flavor (e.g., a Newtonian fluid or a thixotropic fluid incorporating tobacco of some form). Various types of smokeless tobacco products are set forth in US Pat. Nos. 1,376,586 to Schwartz; 3,696,917 to Levi; 4,513,756 to Pittman et al.; 4,528,993 to Sensabaugh, Jr. et al.; 4,624,269 to Story et al.; 4,987,907 to Townsend; 5,092,352 to Sprinkle, III et al.; and 5,387,416 to White et al.; US Pat. App. Pub. Nos. 2005/0244521 to Strickland et al. and 2008/0196730 to Engstrom et al.; PCT WO 04/095959 to Amarp et al.; PCT WO 05/063060 to Atchley et al.; PCT WO 05/016036 to Bjorkholm; and PCT WO 05/041699 to Quinter et al.. See also, the types of smokeless tobacco formulations, ingredients, and processing methodologies set forth in US Pat. Nos. 6,668,839 to Williams; 6,834,654 to Williams; 6,953,040 to Atchley et al.; 7,032,601 to Atchley et al.; 7,694,686 to Atchley et al.; 7,861,728 to Holton, Jr. et al.; 7,819,124 to Strickland et al.; 7,810,507 to Dube et al.; and 8,168,855 to Nielsen et al; US Pat. Appl. Pub. Nos. 2004/0020503 to Williams, 2006/0191548 to Strickland et al.; 2007/0062549 to Holton, Jr. et al.; 2008/0029116 to Robinson et al.; 2008/0029117 to Mua et al.; and 2008/0173317 to Robinson et al.

Residue of biomass or anatomical part material remaining after subjecting biomass or anatomical part material to a separation process (e.g., cold pressing or solvent extraction) and removing some portion of the biomass or one or more anatomical parts can also be incorporated into a tobacco product, including any of the tobacco products mentioned herein with regard to biomass or one or more anatomical parts, or isolates therefrom. For example, an insoluble pulp residue remaining after solvent extraction of a solvent-soluble portion of a biomass or anatomical part material can likewise be used as a component of a tobacco composition.

Embodiments of a process such as is described in various examples herein are more fully illustrated such as may follow below, set forth to illustrate a process such as is described and not to be construed as limiting thereof.

In connection with a process such as is described in various embodiments herein, it is found that lignin is readily derived through processing of physically and/or chemically untransformed or transformed biomass from the *Nicotiana* species.

In an embodiment, a process such as is described herein provides a process for producing a plastic article comprising an isolated lignin from a quantity of tobacco biomass as defined in claim 1, the process comprising contacting a quantity of tobacco biomass with a quantity of acid to form an acidified digest mixture; contacting a quantity of the acidified digest mixture with a quantity of alcohol selected from at least one of an aliphatic alcohol and an aromatic alcohol to form an alcohol-containing mixture; effecting a separation of the alcohol-containing mixture into an alcohol-soluble phase and an alcohol-insoluble phase; and effecting a removal of alcohol from a quantity of the alcohol-soluble phase sufficient to yield a quantity of an isolated lignin from the alcohol-soluble phase.

According to a process such as is described herein, a quantity of tobacco biomass may comprise a mass of tobacco biomass anywhere in a range from a femtogram or less to a metric ton or more.

According to a process such as is described herein, an ambient temperature may be a temperature customarily obtained in a room, or in a laboratory, or in a field at a time concurrent with or subsequent to harvest, or in another environment. Without limitation, an ambient temperature may be a temperature between about 5 degrees Celsius and about 40 degrees Celsius. An ambient temperature may vary from one portion and/or step in a process according to a process such as is described in various embodiments herein to another. A process such as is described herein may be performed, for example, at an ambient temperature.

According to a process such as is described herein, a disrupting of the physical integrity of a quantity of tobacco biomass can be effected via application of physical force and/or direction of electromagnetic radiation to at least a portion of the tobacco biomass and/or more generally through any means of performing work on the quantity of tobacco biomass, including, without limitation, shredding, grinding, macerating, comminuting, milling, tearing, grating, slicing, shearing, pulverizing, microwaving, lyophilizing and/or freeze-thawing.

The acid may be a mineral acid. The alcohol may be butanol.

The separation may comprise solvent extraction, chromatography, distillation, filtration, pressing, recrystallization, and/or solvent-solvent partitioning.

The removal may be effected by evaporation, sublimation, lyophilization, solvent extraction, chromatography, distillation, filtration, pressing, recrystallization, and/or solvent-solvent partitioning.

The process may be embodied in production of a plastic consisting essentially of poly-L-lactic acid and an isolated tobacco lignin, such as, by way of example and not of limitation, an isolated tobacco lignin produced by steps comprising contacting a quantity of tobacco biomass with a quantity of acid to form an acidified digest mixture; contacting a quantity of the acidified digest mixture with a quantity of alcohol selected from at least one of an aliphatic alcohol and an aromatic alcohol (for example butanol) to form an alcohol-containing mixture; effecting a separation of a quantity of the alcohol-containing mixture into an alcohol-soluble phase and an alcohol-insoluble phase; and effecting a removal of alcohol from a quantity of the alcohol-soluble phase sufficient to yield a quantity of an isolated lignin from the alcohol-soluble phase.

The process such as is described may be embodied in production of a colorant consisting essentially of an isolated tobacco lignin and a suitable carrier and/or diluent, wherein the isolated tobacco lignin is produced by steps comprising contacting a quantity of tobacco biomass with a quantity of acid to form an acidified digest mixture; contacting a quantity of the acidified digest mixture with a quantity of alcohol selected from at least one of an aliphatic alcohol and an aromatic alcohol (for example butanol) to form an alcohol-containing mixture; effecting a separation of a quantity of the alcohol-containing mixture into an alcohol-soluble phase and an alcohol-insoluble phase; and effecting a removal of alcohol from a quantity of the alcohol-soluble phase sufficient to yield a quantity of an isolated lignin from the alcohol-soluble phase.

The process as described herein may be used in the production of a tobacco product for consumption by a consumer desiring to consume the product, the product comprising an isolated tobacco lignin produced by steps comprising contacting a quantity of tobacco biomass with a quantity of acid to form an acidified digest mixture; contacting a quantity of the acidified digest mixture with a quantity of alcohol selected from at least one of an aliphatic alcohol and an aromatic alcohol (for example butanol) to form an alcohol-containing mixture; effecting a separation of a quantity of the alcohol-containing mixture into an alcohol-soluble phase and an alcohol-insoluble phase; and effecting a removal of alcohol from a quantity of the alcohol-soluble phase sufficient to yield a quantity of an isolated lignin from the alcohol-soluble phase.

The process may be embodied in production of a product such as is described wherein the product comprises a plastic and a colorant, and wherein the plastic and the colorant comprises an isolated tobacco lignin such as is set forth herein.

Lignin derived from tobacco has been known to be a constituent of a so-called "black liquor" process output. This process output has not been known in the art as something saleable for profit or as an article of commerce but rather has been known in the art to be burned or otherwise disposed of at some non-negligible cost or otherwise used as a substitute for something else of minimal value.

It has been known in the art that lignin is rarely isolated in pure form and is generally not free from other contaminating materials. In a pulping process that can yield lignin, there may be an acid digestion of tobacco biomass followed by a solvent extraction of the acid digest. Ethanol has been used in the art as an extraction solvent. Surprisingly, in a process such as described herein, it was found that butanol extraction of the acid digest yielded lignin of high purity and distinctive properties. The lignin so obtained was a black solid resembling obsidian in color and surface texture.

Lignin derived from the above-described alcohol extraction of an acid digest of tobacco biomass was mixed at various concentrations (e.g., 5%, 10%, 40%) with poly-L-lactic acid (PLA), and the color of the resultant polymer was noted. A concentration of lignin of 5% or 10% yielded a brown product while a concentration of lignin of 40% yielded a black product. Such a product was a moldable or malleable plastic. In an embodiment, lignin may be partially or fully pyrolyzed or left unpyrolyzed. In an embodiment, wherein an unpyrolyzed lignin is mixed with, for example, PLA, a resultant polymer may possess a brown color. In an embodiment, wherein a pyrolyzed lignin is mixed with, for example, PLA, a resultant polymer may possess a gray color or a black color.

Accordingly, a lignin derived from tobacco such as is made by a process such as is described herein is useful as a dye for packaging or printing purposes. Additionally, a lignin derived from tobacco such as is made by a process such as is described herein is useful as a plasticizer, or a filler compatible with any of various polymers used to make plastic articles, for polymers including but not limited to PLA, polypropylene and/or polyethylene. There can be thermal forming of the resulting plastic, which can be made into a brown film, or a gold film, in some formulations.

Accordingly, a lignin derived from tobacco such as is made by a process such as is described in various embodiments herein is useful as a colorant. A lignin derived from tobacco such as is made by a process such as is described in various embodiments herein is useful to impart desired properties to polymers. For example, PLA has been regarded in the art as a suboptimal barrier material as it permits traversal of oxygen at undesirably high rates. Furthermore, PLA has been known in the art to become brittle when molded. A lignin derived from tobacco such as is made by a process such as is described in various embodiments herein, when combined with PLA, is useful for making a polymer that is softer and less brittle than a pure PLA polymer. Such a lignin-PLA product is accordingly more useful than a pure PLA polymer for a variety of applications.

Likewise, given consumer demand for plastic products that are "BPA-free" or "phthalate-free," a lignin derived from tobacco such as is made by a process such as is described in various embodiments herein is useful for making a BPA-free and/or phthalate-free plastic product.

A representative sample prepared according to a process such as described herein was determined to have a moisture content of 1.81% (constant weight ~ 72 hrs in vacuum oven). Ash content was determined also for representative samples. For this test clean, dry porcelain crucibles with lids were ignited in a muffle furnace at 525 °C for ~30-40 minutes. After taking the crucibles out of the oven, they were placed in a desiccator, cooled to room temperature and weighed. The oven-dried samples (OD) were then placed in the crucibles and ignited at temperature. Total ash content of all the samples is reported in Table 1. Since the combustion was incomplete at 525 °C, the samples were then placed in a muffle furnace at 900 °C. A first sample was determined to have 1.78% ash at 525 °C and 1.38% ash at 900 °C. A second sample was determined to have 1.03% ash at 525 °C and 0.93% ash at 900 °C. A third sample was determined to have 1.76% ash at 525 °C and 1.43% ash at 900 °C.

Total lignin content in a representative sample prepared according to a process such as described herein was determined using TAPPI standard T 222 original method (om) 11 and TAPPI useful method (um) 250. Three OD samples were weighed and placed in three Erlenmeyer flasks respectively, to which 72% sulfuric acid was added. The samples were allowed to sit for 2 hours with intermittent shaking and mixing, after which the acid was diluted to 3% and the samples were boiled for 4 hours (maintaining volume). After boiling, the samples were allowed to cool overnight and the precipitated lignin (acid insoluble/Klason) was filtered through pre-weighed Gooch crucibles which were then oven dried at 105 °C to constant weight. The filtrate was collected and used for acid-soluble lignin by UV-Vis. Total lignin content was calculated as the sum of acid-insoluble/Klason lignin and acid-soluble lignin. A first sample was determined to have 75.27% acid-insoluble lignin, 1.60% acid-soluble lignin, and hence 76.87% total lignin. A second sample was determined to have 76.64% acid-insoluble lignin, 1.52% acid-soluble lignin, and hence 78.16% total lignin. A third sample was determined to have 76.25% acid-insoluble lignin, 1.47% acid-soluble lignin, and hence 77.72% total lignin.

Nitrobenzene oxidation was performed using the procedure of Bose *et al.* (Bose, S.K.; Francis, R.C.; Govender, M.; Bush, T.; Spark, A. Lignin Content Versus Syringyl to Guaiacyl Ratio Amongst Poplars. Bioresour. Technol. 2009, 100, 1628-1633). In a typical experiment, 50 mg of OD lignin sample was placed in a small steel autoclave. To the lignin, was added 40 mL of 2M NaOH and 2.5 mL nitrobenzene. The autoclave was flushed with nitrogen, prior to sealing with a screw-cap fitted with a Teflon gasket, and placed in a preheated oil bath at 170 °C for 2.5 hours with intermittent shaking. After the end of the reaction, the autoclave was cooled to room temperature, and the reaction mixture was extracted 3X times with CHCl₃. The pH of the aqueous phase was adjusted to -pH 3 with conc. HCl and then extracted 3X with diethyl ether. The ether extract was dried over sodium sulfate, filtered and evaporated to dryness *in vacuo.* The internal standard, 2,6-dimethoxyphenol, was added to the reaction products, following which the entire mixture was silylated with BSTFA and analyzed by GC-MS. The first time the experiment was run (samples S1 and S2) the reactivity was very poor. Major portion of the sample was unreacted, which could be attributed to the nature of the sample. To confirm the lack of reactivity, the original sample was ground using a mortar and pestle and the experiments were repeated (Samples S3, S4, S5). The reaction yields showed a marked increase after grinding the samples as seen in Tables 1 and 2.

**Table 1: Total S/G ratio after nitrobenzene oxidation and percent yields of S and G products based on weight of lignin used where V=vanillin, VA=vanillic acid, S=syringaldehyde, SA=syringic acid.**

| **Sample ID** | **S/G** | **V(%)** | **VA (%)** | **S(%)** | **SA (%)** | **Total yield (%)** |
|---|---|---|---|---|---|---|
| S1 | 0.86 | 4.42 | 0.88 | 4.38 | 1.11 | 10.79 |
| S2 | 0.67 | 1.37 | 0.22 | 1.06 | 0.23 | 2.88 |
| S3 | 0.75 | 20.05 | 4.88 | 17.09 | 5.53 | 47.55 |
| S4 | 0.70 | 35.25 | 5.05 | 27.84 | 6.15 | 74.29 |
| S5 | 0.63 | 40.22 | 5.89 | 28.05 | 6.71 | 80.87 |

**Table 2: Percent yields of S and G products in percent based on weight of sample used after nitrobenzene oxidation where V=vanillin, VA=vanillic acid, S=syringaldehyde, SA=syringic acid.**

| **Sample ID** | **V(%)** | **VA (%)** | **S(%)** | **SA (%)** | **Total yield (%)** |
|---|---|---|---|---|---|
| S1 | 3.43 | 0.68 | 3.39 | 0.86 | 8.36 |
| S2 | 1.06 | 0.17 | 0.82 | 0.18 | 2.23 |
| S3 | 15.54 | 3.78 | 13.25 | 4.28 | 36.85 |
| S4 | 27.34 | 3.92 | 21.60 | 4.77 | 57.63 |
| S5 | 31.20 | 4.57 | 21.76 | 5.20 | 62.73 |

Alkaline oxidation was performed using the procedure of Wu *et al.* (Wu, G.; Heitz, M.; Chornet, E. Improved Alkaline Oxidation Process for the Production of Aldehydes (Vanillin and Syringaldehyde) from Steam-Explosion Hardwood Lignin. Ind Eng Chem Res 1994, 33, 718-723), with minor modifications. In a typical experiment, approximately 5 g of OD lignin was placed in a Parr reactor to which 50 mL of alkaline solution (6.75 g NaOH in 50 mL DI water), 0.25 g of CuSO₄ and 0.025 g of FeCl₃ were added. The reactor was sealed, with constant stirring and 200 psi of oxygen at cold pressure was introduced. The temperature of the reactor was then set to 170 °C and the reaction was allowed to go for 10 minutes at temperature. After cooling the reactor to room temperature and venting the residual oxygen, the reaction mixture was filtered to remove the catalyst and unreacted lignin. The filtrate (and washings from the Parr reactor) was then acidified to -pH 2 and the precipitated lignin was removed. In the first experiment (sample S 1), filtration was performed to separate the precipitated lignin which did not work effectively. Thus for samples S2 and S3, centrifugation was employed to precipitate the lignin and collect the supernatant, which was then extracted with ethyl acetate (4X). The organic extracts were dried, filtered and the solvent was evaporated *in vacuo.* Internal standard was added to the residual oil and the mixture was silylated and analyzed by GC-MS. Percent yields in terms of lignin weight and sample weight and reported in Tables 3 and 4. Certain compounds detected by gas chromatography - mass spectrometry are listed in Table 5.

**Table 3: Percent yields of vanillin vanillic acid, syringaldehyde, and syringic acid after alkaline oxidation of lignin samples expressed in terms of total lignin content.**

| **Sample ID** | **V(%)** | **VA (%)** | **S(%)** | **SA (%)** | **Total (% -L)** |
|---|---|---|---|---|---|
| S1 | 0.43 | 0.15 | 0.33 | 0.15 | 1.06 |
| S2 | 1.01 | 0.40 | 0.96 | 0.30 | 2.67 |
| S3 | 0.92 | 0.33 | 0.80 | 0.27 | 2.32 |

**Table 4: Percent yields of vanillin vanillic acid, syringaldehyde, and syringic acid after alkaline oxidation of lignin samples expressed in terms of total sample weight.**

| **Sample ID** | **V(%)** | **VA (%)** | **S(%)** | **SA (%)** | **Total (%** - **W)** |
|---|---|---|---|---|---|
| S1 | 0.33 | 0.12 | 0.26 | 0.11 | 0.82 |
| S2 | 0.78 | 0.31 | 0.74 | 0.23 | 2.06 |
| S3 | 0.71 | 0.26 | 0.62 | 0.21 | 1.80 |

**Table 5: Vanillin and Syringyl Derivatives Identified in the Oxidation of Tobacco Stalk Lignin**

| **Retention Time, minutes** | **Compound** |
|---|---|
| **6.17** | **Internal Standard** |
| **8.72** | **Vanillin** |
| **12.02** | **Syringaldehyde** |
| **13.31** | **Vanillic Acid** |
| **15.95** | **Syringic Acid** |

It is widely accepted that the structure of lignin stems from the polymerization and oxidation of three types of phenylpropane units. These units are coniferyl (guaiacyl, G), sinapyl (syringyl, S) and p-coumaryl (H). Under oxidative lignin decomposition these G, S and H units yield predominately derivatives of vanillin, syringaldehyde and substituted phenols, respectively. A representative S/G ratio for a sample of lignin derived from tobacco stalk and prepared according to a process such as described herein is 0.72 (average, n=5).

In an example, in a process such as is described in various embodiments herein, from a 1-kg sample of tobacco biomass was derived about 0.2 kg of lignin.

In an example, any of a number of concentrations of lignin made according to a process such as is described in various embodiments herein was mixed with any of a number of concentrations of a polymer such as polypropylene. High density polypropylene, RE420MOB2-3636, manufactured by Borealis was used as a feedstock in making certain mixtures. Certain samples of lignin additionally included one or more volatile components; certain other samples did not additionally include such one or more volatile components. Lignin including 0% volatile, or 3.7% volatile, or 6.5% volatile, or 7% volatile, or 10.5% volatile or 17% volatile was used as a feedstock in making the mixtures.

In another example, any of a number of concentrations of lignin made according to a process such as is described in various embodiments herein was mixed with any of a number of concentrations of a polymer such as polypropylene. High density polypropylene, RE420MO-B2-3636, manufactured by Borealis was used as a feedstock in making certain mixtures. Certain samples of lignin additionally included one or more volatile components; certain other samples did not additionally include such one or more volatile components. For example, a proportion of lignin in a binary lignin-polypropylene mixture was 1%, 2%, 4%, 5%, 10%, 20% or 50%.

In an additional example, any of a number of concentrations of lignin made according to a process such as is described in various embodiments herein was mixed with any of a number of concentrations of a polymer such as polypropylene to make a binary mixture. The binary mixture was compounded according to one or more methods known in the art and extruded according to one or more methods known in the art to make an extruded mixture. The extruded mixture was then milled according to one or more methods known in the art to form granules.

In a prophetic example, any of a number of concentrations of lignin made according to a process such as is described in various embodiments herein is mixed with any of a number of concentrations of a polymer such as a poly-L-lactate (PLA), a polyethylene (PET) or a polyhydroxyalkanoate (PHA) such as a poly(3-hydroxybutyrate) (PHB) or a poly(3-hydroxyoctanoate). Certain samples of lignin may additionally include one or more volatile components; certain other samples may not additionally include such one or more volatile components. Lignin including 0% volatile, or 3.7% volatile, or 6.5% volatile, or 7% volatile, or 10.5% volatile or 17% volatile may be used as a feedstock in making the mixtures. For example, a proportion of lignin in a binary mixture of lignin and any of PLA, PET or PHA may be 1%, 2%, 4%, 5%, 10%, 20%, 50%, 75% or 90%. Such a binary mixture may be compounded according to one or more methods known in the art and extruded according to one or more methods known in the art to make an extruded mixture. Such an extruded mixture may then be milled according to one or more methods known in the art to form granules.

In an example, smaller lignin particles mixed more efficiently with polypropylene than did larger lignin particles. With increasing proportion of lignin in a binary mixture with polypropylene, larger lignin particles mixed more efficiently with polypropylene.

In another example, very fine lignin particles at a relatively small percentage in a binary mixture were mixed directly with polypropylene to make a mixture useful for further processing into one or more formed plastic articles. In another example, larger lignin particles at a relatively high percentage in a binary mixture are compounded with polypropylene to make a mixture that is then extruded and thereafter milled to form granules useful for further processing into one or more formed plastic articles.

In an example, each of the following test methodologies as shown in Table 6 was employed to assess properties of one or more mixtures of lignin made according to a process such as is described in various embodiments herein and polypropylene and/or of one or more formed plastic articles made from a binary mixture of lignin made according to a process such as is described in various embodiments herein and polypropylene:

**Table 6: Test procedures**

| Test | Test Procedure |
|---|---|
| Moisture Testing | ASTMD 570-81 |
| Melt flow indexing | ASTM D 1238 |
| Moisture Testing | ASTMD |
| Weathering | ASTM D 1435-G23 |
| Ultraviolet Resistance | ASTM D 2565-G-23 |
| Color Testing | ASTM D 638 |
| PH evaluation | ASTM D 974-87 |
| Tensile Testing | ASTM D 638 |
| Impact testing | ASTM D 3763 |
| Notched Izod Impact | ASTM D 256-93a |
| Charpy Impact testing | ASTMD 618 |

In each instance a test result was obtained for a mixture of lignin made according to a process such as is described herein and polypropylene and/or for a formed plastic article made from a binary mixture of lignin made according to a process such as is described herein and polypropylene which was comparable to a test result obtained for polypropylene alone or for a formed plastic article made from polypropylene alone. Typically, a comparable result was within plus or minus 50% of a corresponding polypropylene-only result, and, in many instances, within plus or minus 25%, or plus or minus 10%.

According to a process such as is described herein, a pigment and a filler may be mechanically the same, but they may serve fundamentally different purposes with regard to properties conveyed to a product. The purpose of a pigment may be to change the optical properties of a material. The purpose of a filler may be to change the mechanical, physical or cost characteristics of a material.

According to a process such as is described herein, a coating may be applied to a surface of another material. A coating may be bonded to that material, or a coating may not be bonded to that material. A coating may be applied to a surface within a material. For example, one may apply a coating to an outer surface of a paper or plastic film and apply another layer of paper or plastic film such that the other layer of paper or plastic film contacts the coating so applied. Such application may dispose such a coating between two layers of paper or plastic. Between such two layers, such a coating may function as a peelable seal. When a lignin is doped with one or more metal ions and disposed as a coating on a plastic layer, a laminate is formed that may substantially conduct electricity along the coating formed by the lignin doped with the one or more metal ions but may not substantially conduct electricity to an adjacent plastic layer. A lignin may be printed by one or more processes known in the art to form a component of a circuit board. A lignin doped with one or more metal ions may be printed to form a conducting component of a circuit board. A lignin not doped with one or more metal ions may be printed to form a non-conducting component of a circuit board. Such a circuit board onto which a lignin doped with one or metal ions and/or a lignin not doped with one or more metal ions has been printed may be useful, inter alia, for control of ignition of a tobacco product, such as an electronic cigarette.

A solvent other than butanol may be useful for the dissolution of lignin and may accordingly be substituted for butanol in a process such as is described herein. An aliphatic alcohol other than butanol may be substituted in whole or in part for butanol. An aromatic alcohol may be substituted in whole or in part for butanol.

Many modifications and other embodiments of a process such as is described herein will come to mind to one skilled in the art to which this invention pertains having the benefit of the teachings presented in the foregoing description. Therefore, it is to be understood that a process such as is described in various embodiments herein is not to be limited to the specific embodiments disclosed and that modifications and other embodiments are intended to be included within the scope of the appended claims. Although specific terms are employed herein, they are used in a generic and descriptive sense only and not for purposes of limitation.

## Claims

1. Use of an isolated tobacco lignin as a colorant, wherein the isolated tobacco lignin is produced by steps comprising:
(a) contacting a quantity of tobacco biomass with a quantity of acid to form an acidified digest mixture;
(b) contacting a quantity of the acidified digest mixture with a quantity of alcohol selected from at least one of an aliphatic alcohol and an aromatic alcohol to form an alcohol-containing mixture;
(c) effecting a separation of a quantity of the alcohol-containing mixture into an alcohol-soluble phase and an alcohol-insoluble phase;
(d) effecting a removal of alcohol from a quantity of the alcohol-soluble phase sufficient to yield a quantity of an isolated lignin from the alcohol-soluble phase.

2. Use of the isolated tobacco lignin according to claim 1, wherein the acid is a mineral acid.

3. Use of the isolated tobacco lignin according to claim 1, wherein the alcohol is butanol.

4. Use of the isolated tobacco lignin according to claim 1, wherein the step of effecting a separation of a quantity of the alcohol-containing mixture into an alcohol-soluble phase and an alcohol-insoluble phase comprises solvent extraction, chromatography, distillation, filtration, pressing, recrystallization, and/or solvent-solvent partitioning.

5. Use of the isolated tobacco lignin according to claim 1, wherein the step of effecting a removal of alcohol from a quantity of the alcohol-soluble phase comprises evaporation, sublimation, lyophilization, solvent extraction, chromatography, distillation, filtration, pressing, recrystallization, and/or solvent-solvent partitioning.

6. Use of the isolated tobacco lignin according to claim 1, wherein the polymer is selected from the group consisting of a polypropylene, a polyethylene, a polyhydroxyalkanoate, and a poly-L-lactic acid.

7. Use of the isolated tobacco lignin according to claim 1, wherein the polymer composition comprises 5% isolated lignin by weight.

8. Use of the isolated tobacco lignin according to claim 1, wherein the polymer composition comprises 10% isolated lignin by weight.

9. Use of the isolated tobacco lignin according to claim 1, wherein the polymer composition comprises 40% isolated lignin by weight.

## Patentansprüche

1. Verwendung eines isolierten Tabaklignins als einen Farbstoff, wobei das isolierte Tabaklignin durch Schritte hergestellt wird, welche umfassen:
(a) Inkontaktbringen einer Menge von Tabakbiomasse mit einer Menge von Säure, um ein angesäuertes Digestgemisch zu bilden;
(b) Inkontaktbringen einer Menge des angesäuerten Digestgemisches mit einer Menge von Alkohol, ausgewählt aus zumindest einem aliphatischen Alkohol und einem aromatischen Alkohol, um ein alkoholhaltiges Gemisch zu bilden;
(c) Bewirken einer Trennung einer Menge des alkoholhaltigen Gemisches in eine alkohollösliche Phase und eine alkoholunlösliche Phase;
(d) Bewirken einer Entfernung von Alkohol aus einer Menge der alkohollöslichen Phase, welche ausreicht, um eine Menge eines isolierten Lignins aus der alkohollöslichen Phase zu gewinnen.

2. Verwendung des isolierten Tabaklignins nach Anspruch 1, wobei die Säure eine Mineralsäure ist.

3. Verwendung des isolierten Tabaklignins nach Anspruch 1, wobei der Alkohol Butanol ist.

4. Verwendung des isolierten Tabaklignins nach Anspruch 1, wobei der Schritt des Bewirkens einer Trennung einer Menge der alkoholhaltigen Mischung in eine alkohollösliche Phase und eine alkoholunlösliche Phase Lösungsmittelextraktion, Chromatographie, Destillation, Filtration, Pressen, Rekristallisation und/oder Lösungsmittel-Lösungsmittel-Verteilung umfasst.

5. Verwendung des isolierten Tabaklignins nach Anspruch 1, wobei der Schritt des Bewirkens einer Entfernung von Alkohol aus einer Menge der alkohollöslichen Phase Verdampfung, Sublimation, Gefriertrocknung, Lösungsmittelextraktion, Chromatographie, Destillation, Filtration, Pressen, Rekristallisation und/oder Lösungsmittel-Lösungsmittel-Verteilung umfasst.

6. Verwendung des isolierten Tabaklignins nach Anspruch 1, wobei das Polymer aus der Gruppe ausgewählt ist, bestehend aus einem Polypropylen, einem Polyethylen, einem Polyhydroxyalkanoat und einer Poly-L-Milchsäure.

7. Verwendung des isolierten Tabaklignins nach Anspruch 1, wobei die Polymerzusammensetzung 5 Gew.-% an isoliertem Lignin umfasst.

8. Verwendung des isolierten Tabaklignins nach Anspruch 1, wobei die Polymerzusammensetzung 10 Gew.-% an isoliertem Lignin umfasst.

9. Verwendung des isolierten Tabaklignins nach Anspruch 1, wobei die Polymerzusammensetzung 40 Gew.-% an isoliertem Lignin umfasst.

## Revendications

1. Utilisation d'une lignine de tabac isolée comme colorant, dans laquelle la lignine de tabac isolée est produite par des étapes comprenant :
(a) la mise en contact d'une quantité de biomasse de tabac avec une quantité d'acide pour former un mélange de digestion acidifié ;
(b) la mise en contact d'une quantité du mélange de digestion acidifié avec une quantité d'alcool choisi parmi au moins un alcool aliphatique et un alcool aromatique pour former un mélange contenant de l'alcool ;
(c) la réalisation d'une séparation d'une quantité du mélange contenant de l'alcool en une phase soluble dans de l'alcool et une phase insoluble dans de l'alcool ;
(d) la réalisation d'une élimination de l'alcool d'une quantité de la phase soluble dans de l'alcool suffisante pour produire une quantité d'une lignine isolée de la phase soluble dans de l'alcool.

2. Utilisation de la lignine de tabac isolée selon la revendication 1, dans laquelle l'acide est un acide minéral.

3. Utilisation de la lignine de tabac isolée selon la revendication 1, dans laquelle l'alcool est le butanol.

4. Utilisation de la lignine de tabac isolée selon la revendication 1, dans laquelle l'étape consistant à effectuer une séparation d'une quantité du mélange contenant de l'alcool en une phase soluble dans de l'alcool et une phase insoluble dans l'alcool comprend une extraction par solvant, une chromatographie, une distillation, une filtration, un pressage, une recristallisation et/ou une séparation solvant-solvant.

5. Utilisation de la lignine de tabac isolée selon la revendication 1, dans laquelle l'étape consistant à effectuer une élimination d'alcool à partir d'une quantité de la phase soluble dans de l'alcool comprend une évaporation, une sublimation, une lyophilisation, une extraction par solvant, une chromatographie, une distillation, une filtration, un pressage, une recristallisation et/ou une séparation solvant-solvant.

6. Utilisation de la lignine de tabac isolée selon la revendication 1, dans laquelle le polymère est choisi dans le groupe constitué par un polypropylène, un polyéthylène, un polyhydroxyalcanoate et un acide poly-L-lactique.

7. Utilisation de la lignine de tabac isolée selon la revendication 1, dans laquelle la composition polymère comprend 5 % de lignine isolée en poids.

8. Utilisation de la lignine de tabac isolée selon la revendication 1, dans laquelle la composition polymère comprend 10 % de lignine isolée en poids.

9. Utilisation de la lignine de tabac isolée selon la revendication 1, dans laquelle la composition polymère comprend 40 % de lignine isolée en poids.
